# EUROPEAN PATENT APPLICATION

(11) **EP 3 932 995 A1**
(43) Date of publication of application: **05.01.2022**
(21) Application number: 20184105.3
(22) Date of filing: 04.07.2020
(51) Int. Cl.: C09B 19/00, G01N 33/543

(54) **NOVEL FLUORESCENT SUBSTRATES AND USES THEREOF IN MICROFLUIDICS**

(71) Applicant: Emulseo SAS, 33600 Pessac (FR)
(72) Inventor: MAES, Florine, 33700 Mérignac (FR); PICHAVANT, Loïc, 33000 Bordeaux (FR)
(74) Representative: Lecca, Patricia S.

(57) **Abstract**

The present invention provides novel resazurin derivatives, use thereof in droplet-based microfluidics, for single cell experiments, such as cell proliferation and/or cytotoxicity assays, as well as methods of synthesizing the novel resazurin derivatives.

## Description

### FIELD OF INVENTION

The present invention provides novel fluorescent substrates and uses thereof for microfluidic applications. More specifically the present invention is directed to novel resazurin derivatives, uses thereof in microfluidics, as well as processes for the preparation of these resazurin derivatives and intermediates for the preparation thereof.

### BACKGROUND OF THE INVENTION

The manipulation of fluids to form fluid streams of desired configuration, discontinuous fluid streams, droplets, particles, dispersions, etc... for purposes of fluid delivery, product manufacture, synthesis, analysis, and the like, is a relatively well-studied art. Microfluidic technology refers to the work associated with devices that control and manipulate fluids on the length scale of microns. This field has been rapidly developed and is set to have broad applications in chemistry, pharmacology, biology, healthcare, and food industries. This technology was initially proposed to scale down sample volumes and channel dimensions to perform chemical or biological reactions with very small quantities of reagents and therefore saving processing time.

One such example is to integrate all processing steps of a reaction or a series of reactions on a single microfluidic device. This is often referred to as Lab-on-a-Chip (LOC) or micro-Total Analysis System (µTAS) devices. For some medical applications, microfluidic technology is developed to allow self-contained disposable devices to provide a safe and effective way to work with bio-hazardous or biological materials. Another concept called Lab-on-a-CD was introduced in recent years for biomedical analysis targeted towards *in vitro* diagnostics (IVD), which integrates complex assays in fluidic networks on centrifugal microfluidic systems. LOC devices have several attractive features such as low reagent consumption, minimized waste products, reduced reaction time, and relatively low cost. These benefits allow researchers to perform experiments that were impossible before, such as studying the kinetics of chemical reactions, fabricating special microbeads, or screening biological properties, etc... and is what makes the advancement of microfluidic technology so important.

The utility of such microfluidic devices depends critically on enabling technologies such as the microfluidic peristaltic pump, electrokinetic pumping, dielectrophoretic pump or electrowetting driven flow and various components like substrates on which the reactions are conducted. The assembly of such modules into complete systems provides a convenient and robust way to construct microfluidic devices. Virtually all microfluidic devices are based on flows of streams of fluids. This sets a limit on the smallest volume of reagent that can effectively be used because of the contaminating effects of diffusion and surface adsorption. As the dimensions of small volumes shrink, diffusion becomes the dominant mechanism for mixing leading to dispersion of reactants; moreover, surface adsorption of reactants, while small, can be highly detrimental when the concentrations are low, and volumes are small. As a result, current microfluidic technologies cannot be reliably used for applications involving minute quantities of reagent. For example, bioassays on single cells or library searches involving single beads are not easily performed. An alternate approach that overcomes these limitations is the use of aqueous droplets in an immiscible carrier fluid. These provide a well-defined, encapsulated microenvironment that eliminates cross contamination or changes in concentration due to diffusion or surface interactions. Droplets provide the ideal microcapsule or microreactor that can isolate reactive materials, cells, or small particles for further manipulation and study. An important element in droplet-based microfluidics is the use of appropriate surfactants which are added in the carrier phase to lower the interfacial tension between the carrier phase and continuous phase, thereby helping to stabilize the droplet generation and thus preventing the coalescence of the droplets.

The implementation of these fluorogenic substrates in microfluidic analytics of microorganisms was demonstrated in recent years. In general, fluorogenic substrates are nonfluorescent due to quenching moieties until those are cleaved off enzymatically. Some of the important scaffolds are from the fluorochrome family of xanthene dyes as fluorescein and rhodamine derivatives or the family of coumarins as 4-methylumbelliferone, resorufin, and 7-hydroxycoumarin and also other fluorescent scaffolds as, *e.g.,* oxy-luciferin or artificial fluorochromes as Cy3 or Cy5.5.

Resazurin in particular as a fluorogenic reagent has been reported to be useful for quantitatively measuring cell mediated cytotoxicity, cell proliferation and mitochondrial metabolic activity. It is sold under the name AlamarBlue^{™} (a trademark of AccuMed International, Inc.). AlamarBlue^{™} is a proprietary ready-to-use resazurin-based solution marketed as a fast, simple, economic, and reliable reagent to measure cell proliferation and cytotoxicity with broad applicability in various human and animal cell lines, as well as mycobacteria, bacteria, and fungi. Resazurin, the active ingredient of AlamarBlue^{™} reagent, is a non-toxic, cell-permeable compound that is blue in color and virtually non-fluorescent. Upon entering living cells, resazurin is reduced to resorufin, a compound that is red in color and highly fluorescent (See US Patent No. 5,501,959). Therefore, when added to cells, AlamarBlue^{™} reagent is modified by the reducing environment of viable cells and turns red in color and becomes highly fluorescent. The color change, increased fluorescence and thus changes in cell viability can be easily detected using absorbance (detected at 570 and 600 nm) or fluorescence (using an excitation between 530-560 and an emission at 590 nm), by incubating one hour (or longer for greater sensitivity) and reading using either an absorbance- or fluorescence-based plate reader. This resazurin-based fluorescent reagent is considered as a more sensitive reporter than other commonly used mitochondrial reductase dyes such as MTT and XTT. MTT and XTT are reduced by components early in the respiratory chain, and ultimately block electron flow and respiration. AlamarBlue^{™} substitutes for molecular oxygen as an electron acceptor for oxidoreductases, such as cytochrome oxidase, the last cytochrome in the respiratory chain; accepting electrons at this last step does not interfere with respiration. AlamarBlue^{™} reduction leads to a loss of oxygen and a gain of hydrogen in the molecule, and its reduced form can be detected both colorimetrically and fluorometrically. Relative to most other reductase indicator dyes, AlamarBlue^{™} is non-toxic, and insensitive to drugs, serum and phenol red.

However, resorufins, including its known analogues, when used in droplet-based microfluidics, exhibit lots of "leakage" through the liquid-liquid interface and into neighbouring droplets. It has been proposed that such leakage or exchange between droplets is facilitated by micellar or vesicular structures, which act as carriers between droplets. The exchange between droplets has also been demonstrated with fluorescein and methylumbelliferone dyes. As a result, the measured signal is averaged between droplets and the reliability of the assay is decreased. There is a significant challenge in maintaining a stable concentration of resorufin in microfluidic droplets because the resorufin molecules are prone to leaking.

Several approaches have been used to tackle the problem of resorufin leakage between droplets. For instance, using FC-40 fluorocarbon oil, instead of the most common HFE- 7500 oil, increases the retention of resorufin in droplets but at the expense of the emulsion quality and stability. Decreasing the concentration of the surfactant and the addition of bovine serum albumin (BSA) or sugar additives to the aqueous phase has been shown to decrease the leakage of resorufin. Scheler et al, (ACS Appl. Mater. Interfaces 2016, 8, 11318-11325) described a new class of nanoparticle (NP) surfactants which have been demonstrated to efficiently increase the maintenance of resorufin in the droplets.

US patent No. 5,304,645 describes the synthesis of resorufin derivatives with different substituents, and in particular a carboxylic acid, by reacting nitrosoresorcinol and 2,6-dihydroxybenzoic acid in the presence of MnO₂ and H₂SO₄. Resarurin derivatives as described in this US patent may have the following formula: 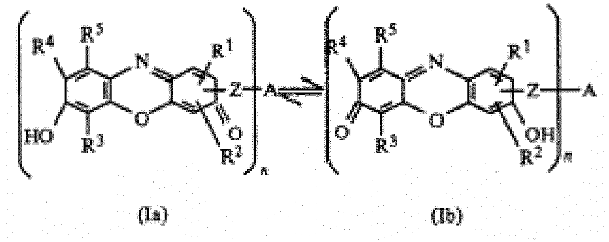 wherein R1, R2, R3, R4 and R5, can be the same or different group, including hydrogen, halogen, carboxyl, carboxamido, lower alkoxycarbonyl, cyano or nitro groups or lower alkyl or lower alkoxy radicals, which can be substituted by carboxyl, carboxamido, lower alkoxycarbonyl, cyano or nitro groups, and wherein R4 and R5 can together also represent an anellated aromatic residue, Z is a bridge member, A is the residue of a ligand and n is a whole number of from 1 to 200.

US Patent No. 4,719,097 discloses phosphates of resorufin derivatives, process of preparation of these derivatives and uses thereof for determining the activity of phosphatases, for example for use in enzymatic immunoassays.

European Patent No. EP0156347 discloses certain resorufin derivatives of general formulas (IIa) and (IIb): 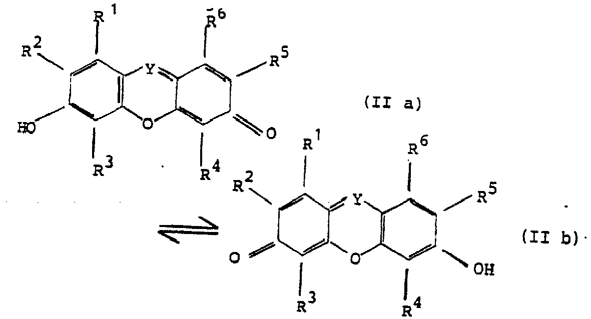 wherein R1 is hydrogen, R₂, R₃ and R₅, may be the same or different group selected from hydrogen, halogen or a lower alkyl; R₄ and R₆, which may be the same or different, are hydrogen, halogen, cyano, lower alkyl, lower alkoxy, carboxyl, lower alkoxycarbonyl, Carboxy lower alkyl, or an optionally mono- or di-substituted carboxamido group or the group:-COO-(CH₂CH₂O)ₙ- R₇, wherein R₇ is hydrogen or a lower alkyl group and n is a whole number from 1 to 4, wherein R₆ can additionally introduce a sulphonyl or nitro group and Y is nitrogen or the group N → O.

However, none of these alternatives have been fully validated to develop reliable alternatives that can be easily integrated into the existing microfluidic technology seamlessly.

The present invention thus provides novel derivatives of resazurin designed to overcome the shortcomings of the parent molecule with specific reference to microfluidics. In particular, the present Applicant was able to develop novel derivatives of resazurin having significantly less risk of leakage in microfluidics, while not affecting the enzyme activities of the fluorescent substrates. The novel resazurin derivatives readily allow measurable absorption in the visible spectrum and, furthermore, can easily be excited to fluorescence and are thus particularly useful in microfluidics in general, PCR tests or single cell experiments more specifically.

### SUMMARY OF THE INVENTION

The present invention thus provides a novel resazurin derivatives having the following Formula (I): 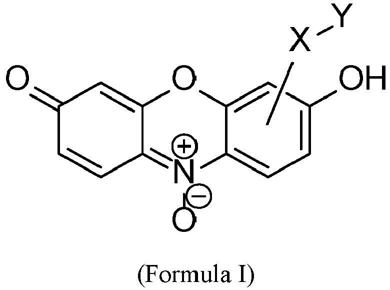 wherein X represents -C(O)NH-, -C(O)NMe-, -NHC(O)-, -NMeC(O)-, -C(O)S-, -SC(O)-,-C(O)O-, -OC(O)-, -OC(O)-, -OC(O)NH-, -OC(O)NMe-, -O-, -S-, -C₃H₆S-, -NHC(O)NH-,-NMeC(O)NH-, -NC(O)NMe-, -NHC(O)O-, -NMeC(O)O-, -SO₂NH-,-NHSO₂-, NHSO₂-C₆H₄-O-, -O-C₆H₄-SO₂NH-, C₂HN₃- or any combination thereof; Y represents a group: 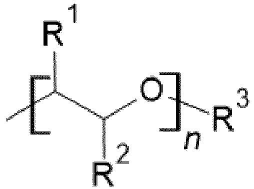 wherein R¹ and R², which may be the same or different, represents hydrogen, hydroxyl, carboxyl, acetyl, carboxamido, amino, and the like; wherein R³ represents a group selected from hydrogen, alkyl, acyl, cycloalkyl, alkenyl, alkynyl, aryl, heteroaryl, or heterocyclyl; and wherein n is any integer from 3-17.

These novel resazurin derivatives are particularly useful as fluorescent-labelled reagent for use in microfluidics technology, particularly in cell proliferation and cytotoxicity assays, with broad applicability in various human and animal cell lines, as well as mycobacteria, bacteria, and fungi. The novel resazurin derivatives according to the present invention are particularly advantageous as they present substantially reduced leakage within the microfluidic droplets, and thus provide a significantly higher reliability of the signal in those cell proliferation and/or cytotoxicity assays.

### BRIEF DESCRIPTION OF THE FIGURES

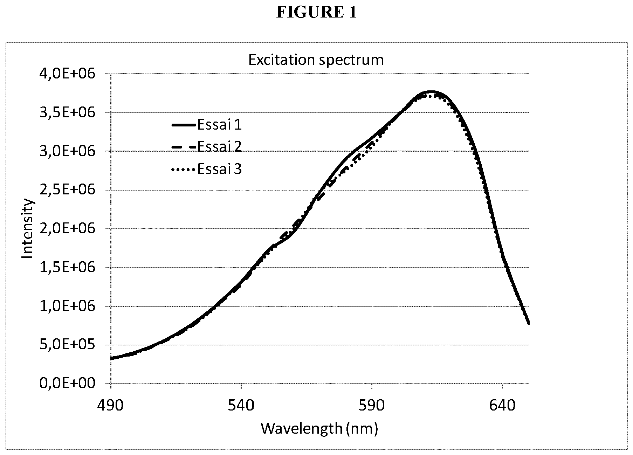

**Figure 1****:** is a graph showing measures of excitation spectra of the novel resazurin derivatives.

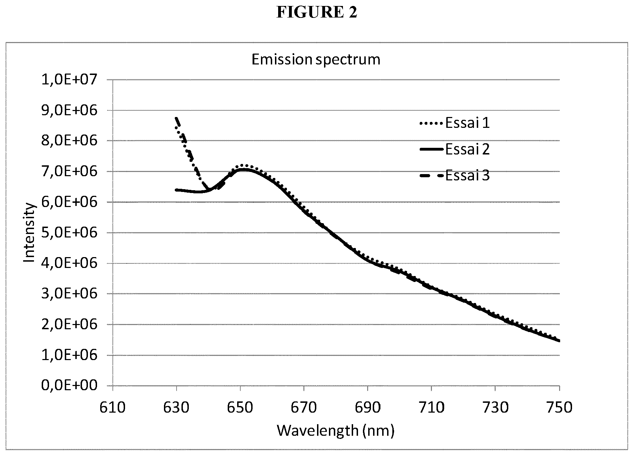

**Figure 2****:** is a graph showing measures of emission spectra of the novel resazurin derivatives for an excitation at 610nm.

### DETAILED DESCRIPTION

The present invention thus provides novel resazurin derivatives as fluorescent substrates comprising the following general formula (I): 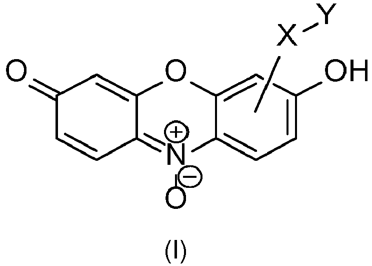 wherein X represents -C(O)NH-, -C(O)NMe-, -NHC(O)-, -NMeC(O)-, -C(O)S-, -SC(O)-,-C(O)O-, -OC(O)-, -OC(O)-, -OC(O)NH-, -OC(O)NMe-, -O-, -S-, -C₃H₆S-, -NHC(O)NH-,-NMeC(O)NH-, -NC(O)NMe-, -NHC(O)O-, -NMeC(O)O-, -SO₂NH-,-NHSO₂-, NHSO₂-C₆H₄-O-, -O-C₆H₄-SO₂NH-, C₂HN₃- or any combination thereof; wherein Y represents a group of the following formula (II): 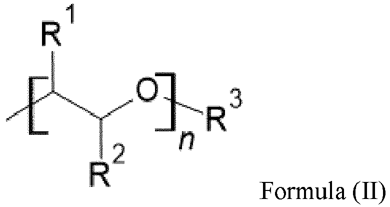 wherein R¹ and R², which may be the same or different, represents hydrogen, hydroxyl, carboxyl, acetyl, carboxamido, amino, and the like; wherein R³ represents a group selected from hydrogen, alkyl, acyl, cycloalkyl, alkenyl, alkynyl, aryl, heteroaryl, or heterocyclyl; and wherein n is any integer from 3-17.

The expression "alkyl" refers to a saturated, straight-chain or branched hydrocarbon group that contains from 1 to 20 carbon atoms, preferably from 1 to 12 carbon atoms, especially from 1 to 6 (*e.g*. 1, 2, 3 or 4) carbon atoms, for example a methyl, ethyl, propyl, iso-propyl, n-butyl, iso-butyl, sec-butyl or tert-butyl. Furthermore, the term alkyl refers to groups in which one or more hydrogen atoms have been replaced by a halogen atom (preferably F or Cl) such as, for example, a 2,2,2-trichloroethyl or a trifluoromethyl group.

The expression "acyl" refers to the groups (alkyl)-C(O)-, (aryl)-C(O)-, (heteroaryl)-C(O)-, (heteroalkyl)-C(O)-, and (heterocycloalkyl)-C(O)-, wherein the group is attached to the parent structure through the carbonyl functionality. In some embodiments, it is a C₁-C₄ acyl radical which refers to the total number of chain or ring atoms of the alkyl, aryl, heteroaryl or heterocycloalkyl portion of the acyloxy group plus the carbonyl carbon of acyl, i.e. three other ring or chain atoms plus carbonyl.

The expression "aryl" refers to an aromatic group that contains one or more rings containing from 6 to 14 ring carbon atoms, preferably from 6 to 10 (especially 6) ring carbon atoms. The expression aryl refers furthermore to groups in which one or more hydrogen atoms have been replaced by fluorine, chlorine, bromine or iodine atoms or by OH, SH, NH2, N3 or NO2 groups. Examples are the phenyl, naphthyl, biphenyl, 2-fluorophenyl, anilinyl, 3-nitrophenyl or 4-hydroxyphenyl group.

The expression "cycloalkyl" refers to a saturated or partially unsaturated (for example, a cycloalkenyl group) cyclic group that contains one or more rings (preferably 1 or 2), and contains from 3 to 14 ring carbon atoms, preferably from 3 to 10 (especially 3, 4, 5, 6 or 7) ring carbon atoms. The expression cycloalkyl refers furthermore to groups in which one or more hydrogen atoms have been replaced by fluorine, chlorine, bromine or iodine atoms or by OH, =O, SH, =S, NH2, =NH, N3 or NO2 groups, thus, for example, cyclic ketones such as, for example, cyclohexanone, 2-cyclohexenone or cyclopenta-none. Further specific examples of cycloalkyl groups are a cyclopropyl, cyclobutyl, cyclopentyl, spiro[4,5]decanyl, norbornyl, cyclohexyl, cyclopentenyl, cyclohexadienyl, decalinyl, bicyclo[4.3.0]nonyl, tetraline, cyclopentylcyclohexyl, fluorocyclohexyl or cyclohex-2-enyl group.

Alkyl, alkenyl, alkynyl, heteroalkyl, aryl, heteroaryl, cycloalkyl, heterocycloalkyl, alkylcycloalkyl, heteroalkylcycloalkyl, aralkyl and heteroaralkyl groups described herein may optionally be substituted.

The expression "optionally substituted" especially refers to groups in which one, two, three or more hydrogen atoms may have been replaced by fluorine, chlorine, bromine or iodine atoms or by OH, =O, SH, =S, NH₂, =NH, N₃ or NO₂ groups. This expression refers furthermore to groups that may be substituted by one, two, three or more unsubstituted C₁-C₁₀ alkyl, C₂-C₁₀ alkenyl, C₂-C₁₀ alkynyl, heteroalkyl, C₃-C₁₈ cycloalkyl, C₂-C₁₇ heterocycloalkyl, C₄-C₂₀ alkylcycloalkyl, C₂-C₁₉ heteroalkylcycloalkyl, C₆-C₁₈ aryl, C₁-C₁₇ heteroaryl, C₇-C₂₀ aralkyl or C₂-C₁₉ heteroaralkyl groups. This expression refers furthermore especially to groups that may be substituted by one, two, three or more unsubstituted C₁-C₆ alkyl, C₂-C₆ alkenyl, C₂-C₆ alkynyl, C₁-C₆ heteroalkyl, C₃-C₁₀ cycloalkyl, C₂-C₉ heterocycloalkyl, C₇-C₁₂ alkylcycloalkyl, C₂-C₁₁ heteroalkylcycloalkyl, C₆-C₁₀ aryl, C₁-C₉ heteroaryl, C₇-C₁₂ aralkyl, or C₂-C₁₁ heteroaralkyl groups.

Preferred fluorescent substrates of formula (I) according to the present invention may comprise structure of formula (I) above wherein Y has the structure of the formula (II) below: 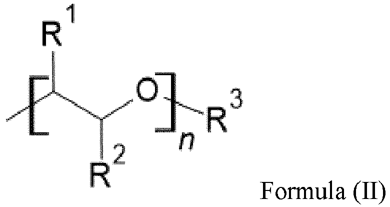 wherein at least one of R¹ or R² is hydrogen, R³ is hydrogen, and wherein n is an integer between 3 and 10. Most preferably, n is 3, 4, or 5.

Droplet-based microfluidic systems have been shown to be compatible with many chemical and biological reagents and as a key technology for the miniaturization and automation of biochemical assays. These droplet-based systems have also been used to directly encapsulate many biological entities resulting in the construction of microscale chemical or biological lab on a chip for biomedical and biotechnology applications, such as high-throughput screening applications, single cell analysis, DNA-based diagnostic assays, PCRs, drug screening, etc...

Droplet-based microfluidic systems employ immiscible phases that are flowed through microchannels such that homogeneous shearing of the liquids results in the formation of emulsions with discrete monodisperse droplets. Most promising formulations for biomedical applications are water-in-perfluorinated-oil emulsions with the use of fluorinated surfactant that is going at the droplet interface. The low solubility of organic molecules in fluorous fluids results in restricted crosstalk between emulsion droplets.

These droplet-based microfluidics assays rely on the reagents such as fluorescent dyes to remain isolated in individual droplets. Some fluorescent molecules tend to diffuse out of the aqueous drops through the continuous phase consisting of a hydrocarbon and subsequently into the neighbouring drops during the incubation and reaction time. Such dye leakage in microfluidic droplets causes cross-contamination of signals from the droplets and has detrimental effects on the accuracy of the microfluidics assays.

Resazurin a fluorescent marker of choice in droplet-based microfluidics, particularly for digital PCR applications or for studies of single cell. The resazurin (or 7-hydroxy-3H-phenoxazin-3-one 10-oxide) is a phenoxazine dye which has a blue to purple color and is irreversibly reduced to resorufin (or 7-hydroxy-3H-phenoxazin-3-one) which is strongly red fluorescent. Resorufin can be detected by visual observation of its pink/red color or by fluorimetry, with an excitation maximum at 530-570 nm and an emission maximum at 580-590 nm. Resorufin however present substantial leakage from aqueous droplets immersed in fluorinated solvents during the incubation time. In such leaky droplet assays, the signal-to-ratio tends to decay over time. Eventually, the dye molecules from all drops become mixed and all droplets appear positive, thereby resulting in a large false-positive rate.

The present Applicant surprisingly found novel resazurin derivatives which present substantially reduced leakage in microfluidic droplets and thus less cross-contamination of signals when compared to the parent resazurin molecule, while maintaining similar enzymatic activity than that of the resazurin.

The novel resazurin derived fluorescent substrate may thus be used in droplet-based microfluidics assays for example for performing biological, chemical and diagnostic assays, fluorescent Polymerase Chain Reactions (PCRs), flow cytometry, etc...

Typically, a microfluidic channel comprises reagent chambers, a sample input, a reaction chamber, such as a PCR reactor, wherein a sample is subjected to a temperature protocol that causes one or more reactions to occur and a detection chamber. The detection system may thus comprise the detection of the fluorescent resazurin derivative dye by detecting fluorescence intensity directly, by detecting the polarization of fluorescence or by detecting fluorescence resonance energy transfer (FRET). In particular, the detection system is configured to detect very weak signals as are characteristic of samples having very small effective amounts of the analyte (e.g., polynucleotide) whose presence is being determined.

The term "emulsion" refers to a preparation of one liquid distributed in small drops, droplets or NanoReactors, in the body of a second liquid. The first and second fluids are immiscible with each other. The first fluid which is dispersed in droplets is referred to as the discontinuous phase, whereas the second liquid is referred to as the continuous phase or the dispersion medium. The continuous phase may be an aqueous solution and the discontinuous phase is a hydrophobic fluid, such as an oil (*e.g*., decane, tetradecane, or hexadecane). This is called oil-in-water emulsion or direct emulsion. Alternatively, the discontinuous phase may be an aqueous solution and the continuous phase can a hydrophobic fluid such as an oil. This is termed a water-in-oil emulsion or reverse emulsions. Micelles are an aggregate of surfactant molecule used to stabilized droplet-based microfluidic emulsion. As soon as the concentration of surfactant reach a critical micellar concentration micelle is created.

The droplet forming liquid may be for example an aqueous buffer solution, such as ultrapure water (e.g., 18 mega-ohm resistivity, obtained, for example by column chromatography), 10 mM Tris HCl and 1 mM EDTA (TE) buffer, phosphate buffer saline (PBS) or acetate buffer. Any liquid or buffer that is physiologically compatible with the population of molecules, cells or particles to be analyzed and/or sorted can be used. The fluid passing through the main channel and in which the droplets are formed is one that is immiscible with the droplet forming fluid. The fluid passing through the main channel can be a non-polar solvent, decane (e g., tetradecane or hexadecane), fluorocarbon oil, silicone oil or another oil (for example, mineral oil). The dispersed phase may include a biological/chemical material. The biological/chemical material can be tissues, cells, particles, proteins, antibodies, amino acids, nucleotides, small molecules, and pharmaceuticals. The biological/chemical material can include one or more labels known in the art.

The emulsion may contain one or more additives, such as agents which reduce surface tensions (surfactants). Surfactants can include Tween^{™}, Span^{™}, fluorosurfactants, and other agents that are soluble in oil relative to water. In some applications, performance is improved by adding a second surfactant to the aqueous phase. Surfactants are a crucial part of the emulsion system as they prevent droplet coalescence, ensure the stability of the emulsion, and may also control or optimize droplet size, flow and uniformity, for example by reducing the shear force needed to extrude or inject droplets into an intersecting channel. This can affect droplet volume and periodicity, or the rate or frequency at which droplets break off into an intersecting channel.

The fluorescent substrates of formula (I) as described above may be used in various bioassays, such as biosensing, cell assay, energy transfer-based assay, probing, protein/immunological assay and microarray/biochip assay. Among the arrays used in microarray/biochip assay, fluorescence-based microarrays/biochips, such as antibody/protein microarrays, bead/suspension arrays, capillary/sensor arrays, DNA microarrays/polymerase chain reaction (PCR)-based arrays, single cell experiments, glycan/lectin arrays, immunoassay/enzyme-linked immunosorbent assay (ELISA)-based arrays, microfluidic chips and tissue arrays, have been developed and used for the assessment of allergy/poisoning/toxicity, contamination and efficacy/mechanism, and quality control/safety.

The present invention also provides a process for the preparation of the resazurin derivatives of formula (I), comprising reacting a compound having the following formula (II): 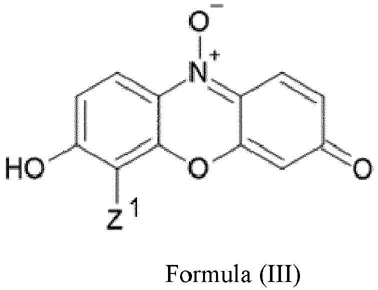 wherein Z¹ is a reactive group,
with a compound having the following formula (IV):

Z²-X-Y Formula (IV)

wherein Z² is a reactive group and X and Y are as defined above,
wherein the reaction is performed in the presence of suitable solvent and reagent,
whereby possibly in the case of individual process steps, protective groups are introduced and subsequently again split off and also individual reactive groups Z¹ and Z² can be converted into other reactive groups.

By reactive groups Z¹ and Z² in the above formula (III) and (IV) are understood as all conventional reactive functional groups. Especially preferred functional groups include acid residues, such as carboxylic and sulphonic acids, as well as groups derived therefrom, such as esters, amides, anhydrides, acid halides, and residues such as primary or secondary amine, cyanate, isocyanate, thiocyanate, isothiocyanate, aldehyde, sulfhydryl, hydroxyl and α-ketohalide radicals and the like. Examples of reactive groups Z¹ and Z² are listed in the Table 1 below, as well as the resulting chemical bond. These residues can, of course, be exchanged for one another and can also assume the meanings of the reactive groups Z¹ and Z².

**Table 1**

| Z¹ | Z² | X |
|---|---|---|
| -COOH | -NH₂ | -CONH- |
| -COOT* | -NH₂ | -CONH- |
| -COOCO₂T1** | -NH₂ | -CONH- |
| -NHCO | -NH₂ | -NHCONH- |
| -NMe-CO | -NH₂ | -N(Me)CONH- |
| -NCS | -NH₂ | -NHCSNH- |
| 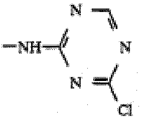 | -NH₂ | 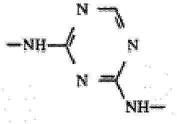 |
| -HC=CH-CO- | -SH | 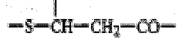 |
| -CHO | -NH₂ | -CN=N- |
| -SO₂Cl | -NH₂ | -SO₂NH |
| -COCH₂-halogen | -SH | -COCH₂-S- |
| -COCH₂-halogen | -OH | -COCH₂-O- |
| -(CH₂)ₘ-NH₂*** | -COOH | -(CH₂)ₘ -NH-CO |
| 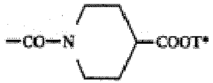 | -NH₂ | 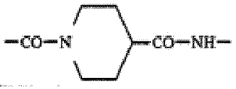 |

| | | |
|---|---|---|
| T* is an alkyl radical with up to 5 carbon atoms or an electronegatively-activated ester group, for example an N-hydroxysuccinimide ester group. T1** is an alkyl radical with up to 5 carbon atoms. ***m is 0 or a whole number of from 1 to 3. | | |

Few examples of the group Y of formula (II) of the final fluorescent compounds (resazurin derivatives) of formula (I) according to the present invention are provided in the following Table 2 without any limitations

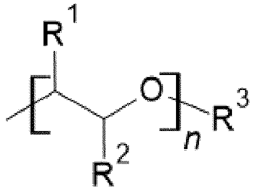

**Table 2**

| R¹ | R² |
|---|---|
| H | H |
| OH | H |
| H | OH |
| COOH | H |
| COCH₃ | H, OH |
| CONH₂ | H |
| NH₂ | H, OH |

The process for the preparation of the resazurin derivatives of formula (I) according to the present invention may be schematized as follows:

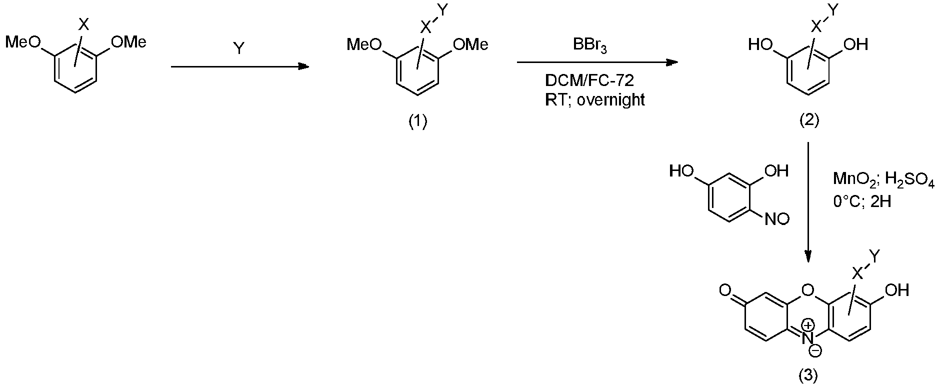

In a 100 mL round bottom flask equipped with a magnetic stirrer bar and a septum is added 20 mL of FC-72. 1.73 mL of boron tribromide (2 eq.; 250 g/mol; 2.64 g/mL) are added dropwise to the reaction mixture via the septum. Then, 0.001 mol of (1) (1 eq) dissolved in 25 mL of dichloromethane are added dropwise in the reaction mixture via the septum. The solution is stirred slowly overnight at room temperature. Then 50 mL of dichloromethane are added and the dichloromethane phase is recovered by decantation and washed with 50 mL of water. Then, the dichloromethane phase is dried with MgSO₄, filtrated and the product (2) is obtained after evaporation and purification by column chromatography on silica gel.

In a 100 mL two neck round bottom flask equipped with a cooler, a magnetic stirrer bar and a septum are introduced 1 g of nitrosoresorcinol (1 eq.; 139 g/mol), 0.0072 mol of (2) (1 eq.) and 625 mg of pyrolusite (MnO₂; 1eq.; 87 g/mol) dissolved/in suspension in 15 mL of methanol.

The reaction mixture is placed in an ice bath (0°C) and 0.7 mL of concentrated H₂SO₄ are added dropwise. The reaction is placed under stirring for 2 hours. The precipitate is filtrated and washed with methanol and the final product (3) is obtained after purification by column chromatography on silica gel.

Additionally, several variations within the process of the present invention are exemplified in the Examples below. In particular, Example 1 describes the linkage of the triethylene glycol methylether on the 2,6-dimethylether benzoic acid through an ester bond. Example 2 describes the linkage of the amine functionalized triethylene glycol methylether on the 2,6-dimethylether benzoic acid through an amide bond. Example 3 describes the linkage of thiol functionalized triethylene glycol methylether on the 2,6-dimethylether benzoic acid by thiol-ene addition. Example 4 describes the linkage of azide functionalized triethylene glycol methylether on the 2,6-dimethylether benzoic acid by Huisgen cycloaddiction. Example 5 describes the linkage of the tripropylene glycol methylether on the 2,6-dimethylether benzoic acid through an ester bond. Example 6 describes the general proceeding for the *in vitro* study of resazurin and resazurin derivatives fluorescence activation. Example 7 describes the general proceeding for the study of fluorescent dye leakage and exchange between droplets.

The present invention further relates to intermediates used in the process of preparation of the resazurin derivatives of formula (I) according to the present invention. These intermediates have the following formula (III) and (IV) as described below:

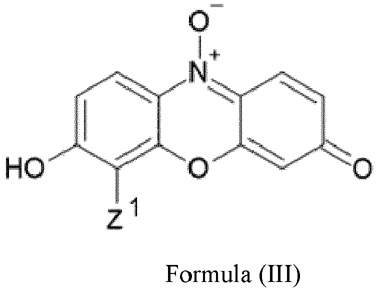

Z²-X-Y Formula (IV)

wherein Z¹ and Z², which may be the same or different, are a reactive group or radical and X and Y are as defined above.

Any ligand may be used for the formation of the novel resazurin derivatives of formula (I) according to the present invention especially those which carry free amino, hydroxyl, sulphhydryl or carboxyl groups via which the ligands can be attached to the resorufin basic structure, possibly with the insertion of the resultant functional group. Free amino or carboxyl groups are especially advantageous. Free amino groups are to be understood to be not only primary but also secondary amino groups. If the ligands do not possess suitable groups, then such groups, for example amino or carboxyl groups, may be introduced by synthetic means. Furthermore, it is possible chemically to activate non-reactive functional groups of such ligands possibly present. Since the thus resulting substances are no longer completely identical with the original compounds, they are referred to as ligand analogues.

Alternatively, the novel resazurin derivatives of formula (I) of the present invention may be attached to a residue. Such residues may be selected from a group comprising of but not limited to haptens, antigens, antibodies, and other substrates, as well as carriers and compounds derived therefrom.

As used herein the term "haptens" refers to a substance with a low molecular weight which, as a rule, is not able to produce antibodies. Compounds with a molecular weight of from about 100 to about 2000 are to be regarded as being substances with a low molecular weight. Examples of such substances include physiologically active substances which are present in the mammalian or human organism, as well as metabolites thereof and pharmaceutical substances which are administered to animals and humans, as well as metabolites thereof. However, by the term hapten there can also be understood all further low molecular weight compounds insofar as they only have a molecular weight in the above-mentioned range. Examples of possible haptens include amines, steroids.

As used herein "antigens" which can be present as ligands in compounds of general formula (I) include, for example, proteins, nucleic acids, polysaccharides, combinations thereof and other high molecular weight substances, According to the present invention, the term antigen is to be understood to mean all high molecular weight compounds which have a minimum molecular weight of about 2000.

As used herein "antibodies" are all those proteins or glycoproteins which react specifically with antigens or haptens, as well as with compounds derived therefrom, to form a complex. According to the present invention, as ligands compounds of general formula (I), there can be used intact antibodies as well as fragments thereof. These fragments can also be called antibodies insofar as they are able to bind antigens and haptens, as well as compounds derived therefrom.

The present invention finally provides with a method of using the novel fluorescent substrate of formula (I) in droplet-based microfluidics.

Fluorescent substrates (resazurin derivatives) of formula (I) may advantageously be used for the determination of enzymes. For this purpose, they may be bound to a substrate which can be split by the enzyme to be determined. After reaction of the labelled substrate with the enzyme and separation of the fission products and unreacted substrate, the activity of the enzyme can be determined. For example, compound of general formula (I) may be bound to a glycopeptide and the coupling product hereby obtained used as a substrate for the detection of endoglucosidase activity. Labelling with dansyl compounds is known for the determination of endoglucosidases. In comparison with such compounds, substrates of formula (I) according to the present invention are characterized by an especially high sensitivity.

The detection reagent may comprise the resazurin derivatives of formula (I) for example attached to a solid support. Typically, the solid support comprises a surface of a microfluidic device. Preferably, the said solid support comprises a surface of a microchannel or a microwell. Alternatively, the said solid support comprises microchamber in a single cell barcode device.

For example, microfluidic assays may use fluorescent-labelled latex particles in the sorting of cells in a "fluorescent activated cell sorter". Such particles can also be readily fluorescent labelled, for example by the reaction of latex particles containing hydroxyl, sulphhydryl, amino or also carboxyl or sulphonic acid groups with the novel fluorescent substrate of general formula (I) as described above.

The microfluidic devices generally include one or more analysis units. Such analysis unit is a microelement, *e.g*., a microchip. The analysis unit includes at least one inlet channel, at least one main channel, at least one inlet module, at least one coalescence module, and at least one detection module. The analysis unit can further include one or more sorting modules. The sorting modules can be in fluid communication with branch channels which are in fluid communication with one or more outlet modules (collection module or waste module). For sorting applications, at least one detection module cooperates with at least one sorting module to divert flow via a detector-originated signal. A plurality of analysis units may be combined in one device. A "channel," as used herein, means a feature on or in a substrate that at least partially directs the flow of a fluid. The microfluidic device for the present invention can also include one or more detection modules. The detection module is a location within the device, typically within the main channel where molecules, cells, small molecules or particles are to be detected, identified, measured or interrogated on the basis of at least one predetermined characteristic. The molecules, cells, small molecules or particles can be examined one at a time, and the characteristic is detected or measured optically, for example, by testing for the presence or amount of a reporter. For example, the detection module may be optical or electrical detectors or combinations thereof.

The present invention further provides methods for the forming solid phase particles comprising resazurin derivatives of formula (I) according to the present invention on a microfluidic device for downstream analysis. The solid phase particles can be used for various biological or chemical analysis (e.g., DNA or protein analyses). For DNA analysis, post amplification encapsulation of amplicons occurs within a gel or polymer matrix prior to breaking of the droplet emulsion. Amplification reactions within droplets using one of several amplification type methods (described in further detail herein), including, but not limited to; PCR, Rolling Circle Amplification (RCA), Nucleic Acid Sequence Based Amplification (NASBA), ligase chain reaction, etc. followed by encapsulation/solidification of the amplified reaction within the droplets by either polymerizing the droplets using chemical or physical means. A physical means might be termed 'gelling' whereby one incorporates low temperature agarose within the droplet during formulation and keeping the droplet above the solidification temperature until one desires the droplet to solidify.

As a matter of convenience, predetermined amounts of the reagents, compound libraries, and/or emulsions described herein and employed in the present invention can be optionally provided in a kit in packaged combination to facilitate the application of the various assays and methods described herein. Such kits also typically include instructions for carrying out the subject assay, and may optionally include the fluid receptacle, *e.g*., the cuvette, multiwell plate, microfluidic device, etc. in which the reaction is to be carried out. Typically, reagents included within the kit are uniquely labelled emulsions containing tissues, cells, particles, proteins, antibodies, amino acids, nucleotides, small molecules, substrates, and/or pharmaceuticals. These reagents may be provided in pre-measured container (e.g., vials or ampoules) which are co-packaged in a single box, pouch or the like that is ready for use. The container holding the reagents can be configured so as to readily attach to the fluid receptacle of the device in which the reaction is to be carried out (e.g., the inlet module of the microfluidic device as described herein), one embodiment, the kit can include an RNAi kit.

### EXAMPLES

### EXAMPLE 1:

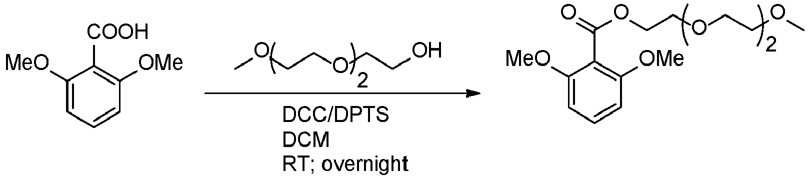

5 g of 2,6-dimethylether benzoic acid (182 g/mol; 0.03 mol), 6.2 g of dicyclohexylcarbodiimide (1 eq.; 206 g/mol) and 2.5 g of 4-(dimethyl-amino)pyridinium 4-toluenesulfonate (0.3 eq.; 279 g/mol) are dissolved in 50 mL of dichloromethane in a 100 mL two neck round bottom flask equipped with a magnetic stirrer bar and rubber seals. The reaction medium is placed under argon and 4.88 g of triethylene glycol methylether (1.1 eq.; 148 g/mol) dissolved in 10 mL of dichloromethane and dried two days with molecular sieve are introduced via the rubber seal under stirring. After 16 hours, the reaction is quenched with 10 mL of water and extracted with 2X50 mL of dichloromethane. The organic layer is dried with MgSO₄, filtrated and the solvent is evaporated. The product is dissolved in ethyl acetate and filtrated. The final product is obtained after evaporation.

### EXAMPLE 2:

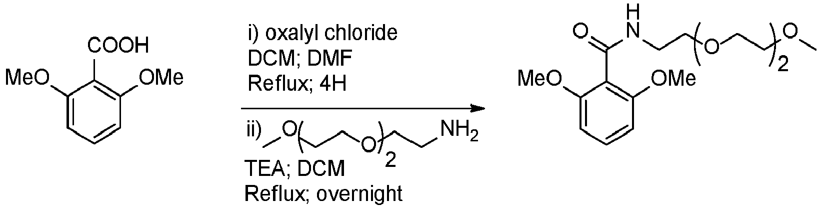

In a 100 mL two neck round bottom flask equipped with a cooler, a magnetic stirrer bar and a septum and dried during 4 hours under vacuum at 60°C and placed under argon are introduced 5 g of 2,6-dimethylether benzoic acid (182 g/mol; 0.03 mol) dissolved in 20 mL of dry dichloromethane. Then 3.85 mL of oxalyl chloride (1.5 eq.; 127 g/mol; 1.48 g/mL) and 200 µL of DMF are introduced dropwise via the septum. The reaction is placed under stirring and under argon for 4 hours at 60°C. Then, the reaction mixture is placed under vacuum to evaporate the excess of oxalyl chloride and the dichloromethane.

Then, 4.89 g of amine functionalized triethylene glycol methoxyether (1 eq.; 163 g/mol) and 8.3 mL of dry triethylamine (2 eq.; 101 g/mol; 0.726 g/mL) dissolved in 20 mL of dry dichloromethane are added dropwise via the septum. The reaction is placed under stirring and under argon at 60 °C overnight. Then, the reaction is quenched with 10 mL of water and extracted with 2X50 mL of dichloromethane. The organic layer is dried with MgSO₄, filtrated and the solvent is evaporated. The product is dissolved in ethyl acetate and filtrated. The final product is obtained after evaporation.

### EXAMPLE 3:

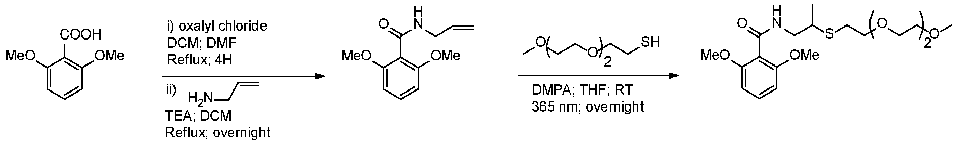

### Step1:

In a 100 mL two neck round bottom flask equipped with a cooler, a magnetic stirrer bar and a septum and dried during 4 hours under vacuum at 60°C and placed under argon are introduced 5 g of 2,6-dimethylether benzoic acid (182 g/mol; 0.03 mol) dissolved in 20 mL of dry dichloromethane. Then 3.85 mL of oxalyl chloride (1.5 eq.; 127 g/mol; 1.48 g/mL) and 200 µL of DMF are introduced dropwise via the septum. The reaction is placed under stirring and under argon for 4 hours at 60°C. Then, the reaction mixture is placed under vacuum to evaporate the excess of oxalyl chloride and the dichloromethane.

Then, 2.25 mL of allylamine (1 eq.; 57 g/mol; 0.761 g/mL) and 8.3 mL of dry triethylamine (2 eq.; 101 g/mol; 0.726 g/mL) dissolved in 20 mL of dry dichloromethane are added dropwise via the septum. The reaction is placed under stirring and under argon at 60 °C overnight. Then, the reaction is quenched with 10 mL of water and extracted with 2X50 mL of dichloromethane. The organic layer is dried with MgSO₄, filtrated and the solvent is evaporated. The product is dissolved in ethyl acetate and filtrated. The final product is obtained after evaporation and purification by column chromatography.

### Step2:

In a 100 mL two neck round bottom flask equipped with a magnetic stirrer bar and two septa are introduced 2 g of the product obtained step 1 (1 eq.; 221 g/mol) and 1.62 g of thiol functionalized triethylene glycol methoxyether (1 eq.; 180 g/mol) dissolved in 20 mL of THF.

The reaction mixture is outgased by bubbling argon for 30 min. Then 461 mg of DMPA (0.2 eq.; 256 g/mol) are introduced under an argon flux. The reaction mixture is irradiated at 365 nm overnight under stirring and under argon at room temperature. Then, the solvent is evaporated, and the product is dissolved in 50 mL of dichloromethane and washed with 10x10 mL of milliQ water. The organic layer is dried with MgSO₄, filtrated and the solvent is evaporated. The product is dissolved in ethyl acetate and filtrated. The final product is obtained after evaporation.

### EXAMPLE 4:

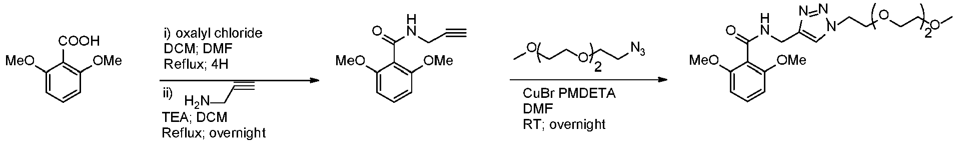

### Step1:

In a 100 mL two neck round bottom flask equipped with a cooler, a magnetic stirrer bar and a septum and dried during 4 hours under vacuum at 60°C and placed under argon are introduced 5 g of 2,6-dimethylether benzoic acid (182 g/mol; 0.03 mol) dissolved in 20 mL of dry dichloromethane. Then 3.85 mL of oxalyl chloride (1.5 eq.; 127 g/mol; 1.48 g/mL) and 200 µL of DMF are introduced dropwise via the septum. The reaction is placed under stirring and under argon for 4 hours at 60°C. Then, the reaction mixture is placed under vacuum to evaporate the excess of oxalyl chloride and the dichloromethane.

Then, 1.92 mL of propargylamine (1 eq.; 55 g/mol; 0.83 g/mL) and 8.3 mL of dry triethylamine (2 eq.; 101 g/mol; 0.726 g/mL) dissolved in 20 mL of dry dichloromethane are added dropwise via the septum. The reaction is placed under stirring and under argon at 60 °C overnight. Then, the reaction is quenched with 10 mL of water and extracted with 2X50 mL of dichloromethane. The organic layer is dried with MgSO₄, filtrated and the solvent is evaporated. The product is dissolved in ethyl acetate and filtrated. The final product is obtained after evaporation and purification by column chromatography.

### Step 2:

In a 100 mL two neck round bottom flask equipped with a magnetic stirrer bar and two septa are introduced 2 g of product obtained in step 1 (1 eq.; 219 g/mol), 1.72 g of azide functionalized triethylene glycol methoxyether (1 eq.; 189 g/mol) and 3.8 mL of PMDETA (2 eq.; 173 g/mol; 0.83 g/mL) dissolved in 30 mL of DMF. The reaction media is outgased by bubbling argon for 30 min. Then 2.6 g of CuBr (2 eq.; 143 g/mol) are added under an argon flux. The reaction mixture is placed under stirring and under argon at room temperature for 3 days. Then, 50 mL of dichloromethane are added, and the organic phase is washed with 10x10 mL of milliQ water. The organic phase is dried with MgSO₄ and filtrated. The final product is obtained after the evaporation of the solvent and purification by column chromatography.

### EXAMPLE 5:

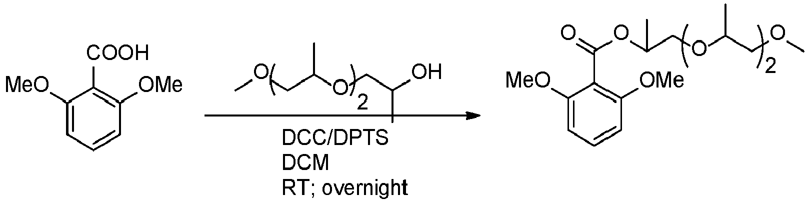

5 g of 2,6-dimethylether benzoic acid (182 g/mol; 0.03 mol), 6.2 g of dicyclohexylcarbodiimide (1 eq.; 206 g/mol) and 2.5 g of 4-(dimethyl-amino)pyridinium 4-toluenesulfonate (0.3 eq.; 279 g/mol) are dissolved in 50 mL of dichloromethane in a 100 mL two neck round bottom flask equipped with a magnetic stirrer bar and rubber seals. The reaction medium is placed under argon and 6.80 g of triethylene glycol methylether (1.1 eq.; 206 g/mol) dissolved in 10 mL of dichloromethane and dried two days with molecular sieve are introduced via the rubber seal under stirring. After 16 hours, the reaction is quenched with 10 mL of water and extracted with 2X50 mL of dichloromethane. The organic layer is dried with MgSO₄, filtrated and the solvent is evaporated. The product is dissolved in ethyl acetate and filtrated. The final product is obtained after evaporation.

### EXAMPLE 6: Resorufin fluorescence assay

1. One day before the experiment, seed cells into a 96-well plate (black plate with clear bottom) containing 100 µL/well of cell culture medium.
2. Incubate the cells overnight in a 37°C incubator using the appropriate CO₂ percentage.
3. Prepare Resazurin stock solution: 2% in milliQ water (i.e. 0.2g in 10mL milliQ water).
4. Add Resazurin solution to plate (use final volume of 0.02%).
5. Incubate the plate for 1-4 hr in standard culture conditions, protected from light. Incubation time depends on cell type and cell number. The plate can be read multiple times to determine the optimal time point.
6. Measure the relative fluorescent units (RFU) using a plate reader. Ex = 530-570 nm, Em = 590-620 nm.

### EXAMPLE 7: Droplet double generation and study of the leakage and the exchange of the fluorophores between droplets.

PDMS microfluidic devices are fabricated by backing PDMS at 65 °C overnight after pouring onto silica wafer. Then, PDMS devices are plasma bonded onto glass and baked again overnight. In order to make the channel surfaces hydrophobic, a surface treatment is performed by injecting Aquapel inside de channels and drying it with an argon flux. The microfluidic devises are incubated at 60 °C overnight before use.

Two parallel flow-focusing drop makers are used with channels of 50 µm in order to create two distinct populations of same size droplets:
- Oil phase: PFPE-*b*-PEG-*b*-PFPE surfactant (FluoSurf^{™}, Emulseo) 2 w/w% in HFE 7500 at 600µL/h
- First aqueous phase: PBS x1 at 100 µL/h
- Second aqueous phase: PBS x1 and fluorophore 100 µM at 100 µL/h (fluorophore: resorufin or modified resorufin)

The two populations emulsion is collected in a plastic container and reinjected in an observation chamber. The emulsion is incubated at 37°C and the fluorescence of the two populations is measured as a function of time.

## Claims

1. A resazurin derivative having the following general Formula (I): 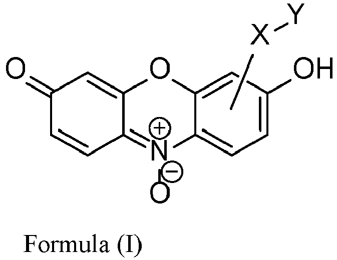
wherein X represents -C(O)NH-, -C(O)NMe-, -NHC(O)-, -NMeC(O)-, -C(O)S-, -SC(O)-,-C(O)O-, -OC(O)-, -OC(O)-, -OC(O)NH-, -OC(O)NMe-, -O-, -S-, -C₃H₆S-, -NHC(O)NH-,-NMeC(O)NH-, -NC(O)NMe-, -NHC(O)O-, -NMeC(O)O-, -SO₂NH-,-NHSO₂-, NHSO₂-C₆H₄-O-, -O-C₆H₄-SO₂NH-, C₂HN₃- or a combination of these groups,
wherein Y has the following general Formula (II): 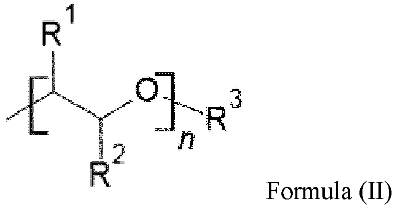
wherein R¹ and R², which may be the same or different, represents hydrogen, hydroxyl, carboxyl, acetyl, carboxamido, and/or amino,
wherein R³ represents a group selected from hydrogen, alkyl, acyl, cycloalkyl, alkenyl, alkynyl, aryl, heteroaryl, or heterocyclyl, and
wherein n is any integer from 3-17.

2. The resazurin derivative according to claim 1, wherein, at least one of R¹ or R² is hydrogen.

3. The resazurin derivative according to any one of the preceding claims, wherein R³ is hydrogen.

4. The resazurin derivative according to any one of the preceding claims, wherein n is between 3 and 10.

5. The resazurin derivative according to any one of the preceding claims, wherein n is 3, 4 or 5.

6. A detection reagent comprising the resazurin derivative of formula (I) attached to a solid support.

7. The detection reagent according to claim 6, wherein said solid support comprise a surface of a microfluidic device.

8. The detection reagent according to any one of claims 6-7, wherein said solid support comprises a surface of a microchannel or a microwell, or wherein said solid support comprises a microchamber in a single cell barcode device.

9. Use of the resazurin derivative according to any one of claims 1-5 in microfluidics.

10. Use according to claim 9, wherein the microfluidics is droplet based.

11. Use of the resazurin derivative according to any one of claims 1-5 in single cell experiments, in cell proliferation and/or cytotoxicity assays.

12. Use of the resazurin derivative according to any one of claims 1-5 in cell proliferation and/or cytotoxicity assays.

13. A process for the preparation of the resazurin derivative according to any one of claims 1-5, comprising the step of reacting a compound having the following Formula (III): 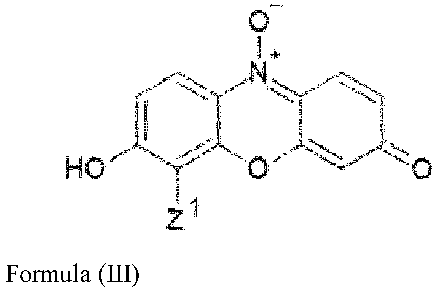 with a ligand having the following general Formula (IV) in the presence of a solvent and reagent:
Z²-X-Y Formula (IV)
wherein the radicals Z¹ are Z², which may be the same or different, are reactive radicals, and wherein X and Y are as defined in claim 1.

14. The process according to claim 14, wherein the radical Z¹ and Z² are selected from - COOH, -NH₂, -OH, -NHCO, -NCS, -CHO, -SH, -SO₂Cl, 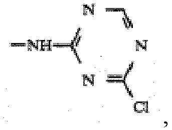 -HC=CH-CO-, - COCH₂-halogen and

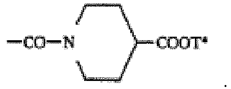

15. A process according to claim 15, wherein Z¹ is COOH and Z² is -NH₂.
